# EUROPÄISCHE PATENTANMELDUNG

(11) **EP 2 489 411 A1**
(43) Veröffentlichungstag der Anmeldung: **22.08.2012**
(21) Anmeldenummer: 11154772.5
(22) Anmeldetag: 17.02.2011
(51) Int. Cl.: A62C 37/36, A62C 37/40

(54) **Energieunabhängige Auslöseeinrichtung für eine gesteuerte Löscheinrichtung**

(71) Anmelder: Minimax GmbH & Co KG, 23840 Bad Oldesloe (DE)
(72) Erfinder: Zlatintsis, Chrysafis, 23554, Lübeck (DE)
(74) Vertreter: Lüdtke, Frank

(57) **Zusammenfassung**

Die Erfindung betrifft eine energieunabhängig gesteuerte Auslöseeinrichtung für eine Löschvorrichtung, bestehend aus dem Löschmittel, dem Löschmittelbehälter (1), dem Treibgas (1.2), der Löschdüse (5), dem Ventil 2), dem Energieautarker Melder (3) und Kabel (4) zwischen dem Ventil (2) und dem Energieautaruker Melder (3), wobei ein Ventil (4) mit einem Piezoaktuator-/generator (3.1) an einem thermischen Auslöseelement (3.2) in Verbindung steht und das Ventil (2) auf dem Löschmittelbehälter (1) auslöst.

Die erfindungsgemäße Lösung hat den Vorteil, daß alle energiebevorrateten Komponenten und Steuersysteme, die den Einsatz von elektrischen Energiespeichern voraussetzen, entfallen, wodurch eine zuverlässige, preiswerte und wenig materialaufwendige Auslöseeinrichtung für eine Löschvorrichtung entsteht.

## Beschreibung

Die Erfindung betrifft eine energieunabhängige Auslöseeinrichtung für eine Löschvorrichtung nach den Merkmalen des ersten Patentanspruches.

Die Auslöseeinrichtung ist überall dort anwendbar, wo Löschvorrichtungen wie Löschanlagen oder Vorrichtungen zur Löschmittelbevorratung wie z.B. Feuerlöscher durch eine energieunabhängige Auslöseeinrichtung ausgelöst werden sollen. Das kann da der Fall sein, wo keine elektrische Energie vorhanden ist oder diese nicht sicher und regelmäßig zur Verfügung steht.

DE 199 45 856 B4 beschreibt eine Sprinklervorrichtung mit einem Ventil, das bei vorgegebenen Kriterien öffnet, wobei dieses Ventil durch einen Sensor angesteuert wird, der schnell auf Parameter anspricht, die bei einem Feuer entstehen, wobei mehrere Sensoren vorgesehen sind, die mittels eines Auswertealgorithmus das Ventil ansteuern und die Sensoren auf verschiedene Parameter des Feuers ansprechen können. In einer besonderen Ausführungsvariante beschreibt das Dokument ein Glasröhrchen, an dem ein piezoelektrisches Verhalten zum Auslösen eines Alarms genutzt wird. Die Stromversorgung kann mittels elektrischer Leitung und Batterie erfolgen.

Nachteilig an diesem Stand der Technik ist, daß bestehende Löschvorrichtungen üblicherweise über Magnetventile mittels automatischer Brandmelder und/oder Brandmelder- und Löschsteuerzentralen angesteuert werden, was eine Energiebevorratung über Batterien oder einen Spannnungsversorgung über Kabel voraussetzt. Andere bekannte Systeme werden über montage- und materialaufwendige bespannte Seilzüge oder hydraulisch/pneumatische Anregerleitungen angesteuert.

Es ist daher Aufgabe der Erfindung, eine Auslöseeinrichtung für eine Löschvorrichtung zu entwickeln, deren Auslösen einfach und unabhängig von einer Energieversorgung erfolgt.

Diese Aufgabe wird durch eine Auslöseeinrichtung für eine Löschvorrichtung nach den Merkmalen des ersten Patentanspruches gelöst.

Unteransprüche geben vorteilhafte Ausgestaltungen der Erfindung wieder.

Die erfindungsgemäße Lösung sieht eine energieunabhängig gesteuerte Auslöseeinrichtung für eine Löschvorrichtung vor, welche aus dem Löschmittel im Löschmittelbehälter, dem Treibgas, der Löschdüse, dem Ventil, dem Melder und Kabel zwischen dem Ventil und dem Melder besteht, wobei es sich bei dem Ventil um ein Impulsventil handelt, welches mit einem elektrisch deaktivierbaren Elektromagneten, vorzugsweise Permanenthaftmagneten, ausgestattet ist, der über ein Kabel mit einem Piezoaktuator oder ― generator an einem thermischen Auslöselement verbunden und über dieses auslösbar ist. Der Löschmittelvorratsbehälter ist druckaufgeladen.

Das Löschmittel ist ein Mittel, welches einen Brandherd durch seine Wirkung kühlt. Dazu kann ein Fluid wie Wasser geeignet sein. Da Löschmittel eine abkühlende Wirkung haben, wird im Weiteren der Begriff Löschmittel auch als Kühlmittel verstanden.

Das Ventil auf dem druckaufgeladenen Löschmittelvorratsbehälter weist einen Doppelkolben auf, der über eine Feder vorgespannt ist. Feder und Doppelkolben befinden sich in einem Gehäuse mit Löschmitteleintritts- und -Austrittsöffnungen. Der elektrisch deaktivierte Permanenthaftmagnet ist in einem Magnetgehäuse angeordnet, wobei der Doppelkolben im Bereitschaftszustand, d. h. in geschlossener Stellung, am elektrisch deaktivierbaren Permanenthaftmagneten haftet.

Vorteilhafterweise ist zwischen dem Kolben und dem Elektropermanentmagneten eine Stahlscheibe angeordnet. Weiterhin kann ein Sicherungsring vorhanden sein. Darüber hinaus ist es vorteilhaft, im Gehäuse ein Rückschlagventil, eine Dichtung und den Anschluß für eine Druckanzeige bzw. eine Druckanzeige anzuordnen.

Der Doppelkolben des Ventils stellt eine druck- und kräfteneutale Ventilsperre dar, gegen die das druckbelastete Löschmittel wirkt.

Melder können überall dort angeordnet sein, wo das Auftreten eines Brandereignisses wahrscheinlich ist. Der energieautarker Melder besteht aus einem gespannten Piezoaktuator oder einem Piezogenerator, einem thermischen Auslöselement, dessen Auslösung temperaturabhängig ist, und einem Rahmen, an dem der Piezoaktuator durch das thermische Auslöselement in einer gespannten oder entspannten Stellung gehalten wird. Vorteilhaft ist es, das thermische Auslöselement als Sprinklerampulle oder Schmelzlot auszuführen.

Vorteilhaft ist es weiterhin, als Piezoaktuator oder -generator Spannungsaktuatoren einzusetzen. Die von Piezoaktuatoren oder -generatoren erzeugte Spannung kann mehrere 100 V betragen. Der Piezoaktuator kann aus einem reibungsfreien vorgespannten monolithischen Piezokeramikstapel bestehen, der in einem Edelstahlgehäuse angeordnet ist. Durch ihre Vorspannung sind diese hervorragend für die dynamische Anwendung und auch für Zugbelastungen geeignet. Bei einem direkten Piezoeffekt erzeugen die Piezoaktuatoren oder -generatoren Spannung durch die mechanische Deformation des Kristalls oder des Kristallpaketes. Dadurch entstehen Oberflächenentladungen, wie sie bei einem Piezofeuerzeug bekannt sind. Die elektrischen Spannungen werden über ein Kabel an ein elektrisch betätigbares Element geleitet, im vorliegenden Fall das Impulsventil oder dessen elektrisch deaktivierbaren Elektropermanenthaftmagneten.

Durch die Betätigung des Piezoaktuators oder -generators wird eine Spannung erzeugt, die über das Kabel zum Elektropermanentmagneten geleitet wird, wodurch die Haftkräfte des Magneten aufgehoben werden und der Doppelkolben durch die Federkraft bewegt wird, wodurch das Ventil geöffnet wird und das Treibgas das unter Druck stehende Löschmittel über das Steigrohr zur Löschdüse und durch diese und Leitungen zum Brand fördert.

Die erfindungsgemäße Auslöseeinrichtung hat den Vorteil, daß alle energiebevorrateten Komponenten und Steuersysteme, die den Einsatz von elektrischen Energiespeichern voraussetzen, entfallen, wodurch eine zuverlässige, preiswerte und wenig materialaufwendige Auslöseeinrichtung für eine Löschvorrichtung entsteht.

Im Folgenden soll die Erfindung an einem Ausführungsbeispiel und zwei Figuren näher erläutert werden. Die Figuren zeigen:
- Figur 1:: Schematische Darstellung der energieunabhängig gesteuerten Auslöseeinrichtung an einer Löschvorrichtung
- Figur 2:: Ventil der erfindungsgemäßen Löschvorrichtung.

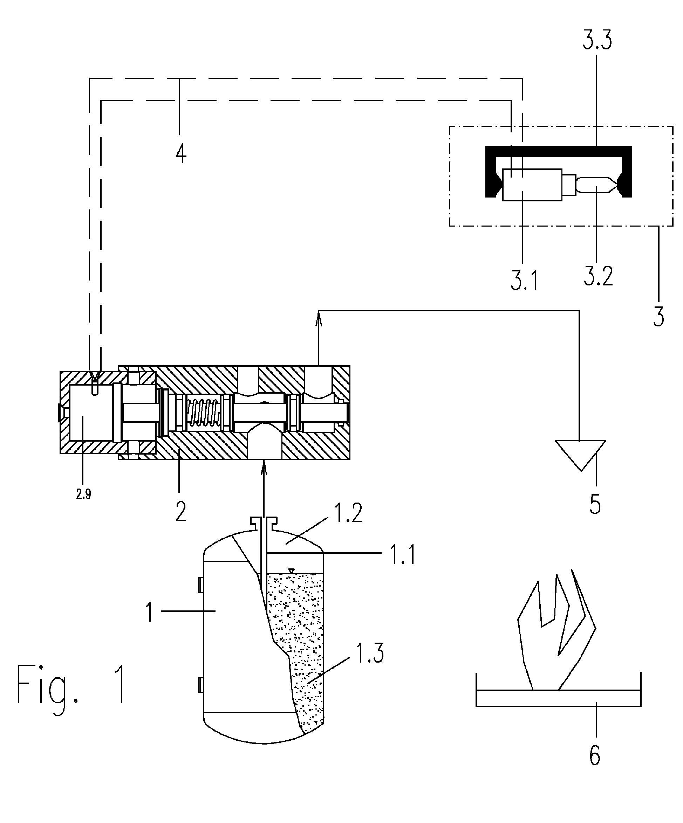

*Figur 1* *zeigt* die erfindungsgemäße Auslöseeinrichtung an einer Löschvorrichtung, bestehend aus dem gespannten Piezoaktuator 3.1, dem thermischen Auslöselement 3.2 dessen Auslösung temperaturabhängig ist, und einem Rahmen 3.3 an dem der Piezoaktuator 3.1 durch das thermische Auslöselement 3.2 in der gespannten Stellung gehalten wird. Das thermische Auslöselement 3.2 kann die Form einer Sprinklerampulle oder eines Schmelzlotes haben. Der energieautarker Melder 3 wird über das zu schützende Objekt 6 positioniert. Das Kabel 4 verbindet die Piezopole mit den Polen des Impulsventils. Das Ventil 2 verschließt die Öffnung des Löschmittelbehälters 1, in dem sich das Treibgas 1.2 und des Löschmittel 1.3 befinden. Das Steigrohr 1.1 dient zum austragen des Löschmittels 1.3 über das Ventil 2 zu der Löschdüse 3 über dem Schutzobjekt 6.

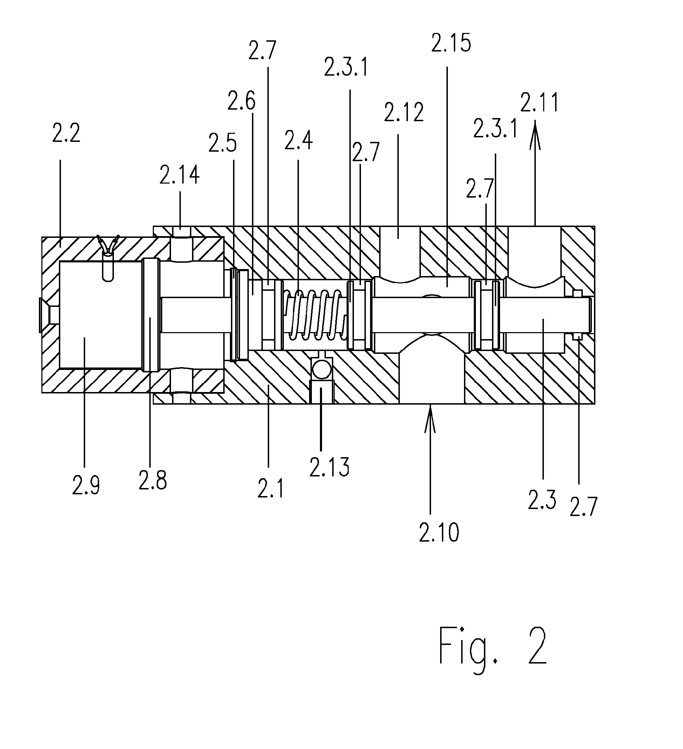

Die *Figur 2* zeigt das Impulsventil. Das Impulsventil 2 besteht im wesentlichem aus einem Gehäuse 2.1, einen über eine Feder 2.4 vorgespannten Doppelkolben 2.3, einen elektrisch deaktivierbaren Permanenthaftmagneten 2.9, an dem im Bereitschaftszustand (geschlossene Stellung) der Kolben 2.3 über einer Stahlscheibe 2.8 am Permanenthaftmagneten 2.9 haftet. Die Aktivierung der Auslöseeinrichtung erfolgt im Brandfall über das thermische Auslöseelement 3.2. Das thermisches Auslöselement 3.2 wird im Brandfall durch die Auslösetemperatur geschmolzen (Schmelzlot) oder geborsten (Sprinklerampulle) und gibt den Entspannungsweg des Piezoactuators 3.1 frei. Durch die Betätigung des Piezoaktuators 3.1 wird eine Spannung erzeugt die über das Kabel 4 zum Permanenthaftmagneten 2.9 geleitet wird. Die geleitete Spannung reicht um kurzzeitig das Magnetfeld des Permanenthaftmagneten 2.9 bzw. seine Haftkraft aufzuheben. Der Doppelkolben 2.3 wird freigegeben und durch die Federkraft der Druckfeder 2.1 in der geöffneten Ventilstellung bewegt. Das unter Permanentdruck eines Treibgases 1.2 stehende Löschmittel 1.3 wird über ein Steigrohr 1.1 zu den Löschdüsen 5 befördert, wodurch der Brand am Objekt 6 gelöscht wird.

In der betriebsbereiten Stellung (Ventil geschlossen) haftet der Doppelkolben 2.3 mittels der Stahlscheibe 2.8 an dem Permanenthaftmagneten 2.9. Die Druckfeder 2.4 ist in gespannter Stellung, die Federkraft wird durch die Haftkraft des Permanenthaftmagneten 2.9 ausgeglichen.

In der Druckkammer 2.15 wirkt der Löschmitteldruck an zwei gleich dimensionierten Kolben 2.3.1. Die Druckkräfte an beiden Kolben 2.3.1 heben sich gegenseitig auf. Auf dem Kolben wirkt keine resultierende Druckkraft. Das Löschmittel 1.3 befindet sich in der Druckkammer 2.15 in Ruhezustand.

Bei einer Akltivierung der Auslöseeinrichtung wird der Permanenthaftmagneten 2.9 mit einem Spannungsimpuls kommend aus dem Piezoaktuator 3.1 beaufschlagt. Dadurch wird die Haftkraft des Permanenthaftmagneten kurzzeitig aufgehoben und die Kraft der Druckfeder 2.4 freigegeben. Die Druckfeder 2.4 bewegt den Doppelkolben 2.3 in die geöffnete Stellung und das Löschmittel kann um den Doppelkolben aus dem Löschmittelaustrittstutzen 2.11 zu den Düsen 5 geleitet werden.

### Liste der verwendeten Bezugszeichen

- 1: Löschmittelvorratsbehälter
- 1.1: Steigrohr
- 1.2: Treibgas
- 1.3: Löschmittel
- 2: Ventil
- 2.1: Gehäuse
- 2.2: Magnetgehäuse
- 2.3: Doppelkolben
- 2.3.1: Kolben
- 2.4: Druckfeder
- 2.5: Sicherungsring
- 2.6: Führungsbuchse
- 2.7: Dichtung
- 2.8: Stahlscheibe
- 2.9: Permanenthaftmagnet
- 2.10: Löschmitteleintrittstutzen
- 2.11: Löschmittelaustrittstutzen
- 2.12: Anschluss für Druckanzeige
- 2.13: Rückschlagventil
- 2.14: Befestigungsschrauben
- 2.15: Löschmitteldruckkammer
- 3: energieautarker Melder
- 3.1: Piezoaktuator / Piezogenerator
- 3.2: thermisches Auslöseelement
- 3.3: Rahmen
- 4: Kabel
- 5: Düse
- 6: Schutzobjekt

## Patentansprüche

1. Energieunabhängig gesteuerte Auslöseeinrichtung für eine Löschvorrichtung **dadurch gekennzeichnet, dass**
- ein energieautarker Melder (3)
- über ein Kabel (4) ein Ventil (2) mit einem elektrisch deaktivierbaren Permanenthaftmagneten (2.9) ansteuert und
- das Ventil (2) auf dem Löschmittelbehälter (1) auslöst.

2. Auslöseeinrichtung nach Anspruch 1, **dadurch gekennzeichnet, daß** der energieautarke Melder (3) einen Piezoaktuator / Piezogenerator (3.1) und ein thermisches Auslöselement (3.2) enthält, welches den Piezoaktuator/-generator (3.1) in der gespannten oder entspannten Stellung hält.

3. Auslöseeinrichtung nach den Ansprüchen 1 und 2, **dadurch gekennzeichnet, daß** der Piezoaktuaktor (3.1) und das thermisches Auslöseelement in einem Rahmen angeordnet sind.

4. Auslöseeinrichtung nach einem der Ansprüchen 1 bis 3, **dadurch gekennzeichnet, daß** der Piezoaktuaktor (3.1) einen reibungsfrei vorgespannten monolithischen Piezokeramikstapel in einem Edelstahlgehäuse darstellt.

5. Auslöseeinrichtung nach einem der Ansprüche 1 bis 4, **dadurch gekennzeichnet, daß** das thermische Auslöselement (3.2) eine Sprinklerampule oder ein Schmelzlot darstellt.

6. Auslöseeinrichtung nach einem der Ansprüche 1 bis 5, **dadurch gekennzeichnet, daß** das Ventil (2) einen über eine Feder (2.4) vorgespannten Doppelkolben (2.3) in einem Gehäuse mit Löschmitteleintritts- und -Austrittsöffnung mit einem elektrisch deaktivierbaren Permanenthaftmagnet (2.9) aufweist, an dem im Bereitschaftszustand (geschlossene Stellung) der Kolben (2.3) haftet.

7. Auslöseeinrichtung nach einem der Ansprüche 1 bis 6, **dadurch gekennzeichnet, dass** der Doppelkolben (2.3) des Ventils (2) eine druck,- und kräfteneutralen Ventilsperre darstellt, auf die ein druckbelastendes Löschmittel wirkt.

8. Auslöseeinrichtung nach Anspruch 7, **dadurch gekennzeichnet, daß** zwischen Kolben (2.3) und Elektropermanentmagnet (2.9) eine Stahlscheibe (2.8) angeordnet ist.
